# EUROPEAN PATENT SPECIFICATION

(11) **EP 0 523 218 B1**
(45) Date of publication and mention of the grant of the patent: **14.05.1997**
(21) Application number: 92903970.9
(22) Date of filing: 04.02.1992
(51) Int. Cl.: H02G 3/26, B25C 5/06, B25C 1/02, B25C 5/11, F16L 3/04, H02G 1/00, B25C 5/16

(54) **Saddle for use with a staple in a stapling tool**
Joch zur Verwendung mit einer Heftklammer in einem Klammerwerkzeug
Pont utilisé avec une agrafe dans une agrafeuse

(30) Priority: 04.02.1991 AU 4460/91
(43) Date of publication of application: 20.01.1993
(73) Proprietor: CLIPMASTER CORPORATION PTY. LTD., Morley, W.A. 6062 (AU)
(72) Inventor: COTELLESSA, Sergio, Maylands, W.A. 6051 (AU)
(74) Representative: Johnson, Terence Leslie
(86) International application number: AU9200037
(87) International publication number: WO9214290

(56) References cited:
- EP-A- 0 207 035
- WO-A-83/03721
- AU-A- 1 156 770
- AU-A- 6 759 765
- AU-B- 159 447
- AU-B- 548 370
- AU-B- 565 190
- AU-B- 597 885
- DE-A- 1 603 698
- DE-A- 2 907 855
- JP-A- 2 261 913

## Description

### FIELD OF THE INVENTION

The present invention relates to a saddle for use in a stapling tool particularly, although not exclusively, envisaged for use in fixing cabling to timber.

### DISCUSSION OF THE PRIOR ART

In running electrical cabling such as in houses, it is common practice to fix the cabling to timber beams in a roof or walls of the house. The fixing is typically accomplished by using "U" shaped clips having a "U" shaped portion terminated at two ends and a nail received on a hole at one of the ends. The clip is positioned so that the "U" portion of the clip sits over the cabling and the two ends of the "U" portion rest against the timber beam. The nail is then driven into the timber beam by striking with a hammer in known manner. Many clips are used spaced along the length of the cabling to fix it to the timber beam. A disadvantage of this arrangement is that an electrician must position both the clip and the cabling with one hand and then operate the hammer with his/her other hand. This requires skill and is tiresome. Also, if the hammer misses hitting the rail it may hit the fingers of the other hand. Further, especially where the cabling is being fixed above the head of the electrician, the clip may be dropped accidentally and lost or the electrician may miss the nail and strikes the cable or the timber which may damage same. Also, in confined spaces it is often very difficult to wield the hammer to drive the nail into the timber.

In attempting to overcome these disadvantages it would be preferred to use a stapling tool. Stapling tools are commonly used in upholstering and sometimes in the fabrication of furniture. A disadvantage of using conventional stapling tools to fix cabling is that the staple may be driven too far into the timber. This may lead to the staple cutting into the insulation of the cabling and shorting the wires in the cabling together. Also, should the stapling tool be poorly aligned with the cabling the staple could be accidently driven through the cabling thus breaching the insulation and necessitating replacement of the cabling. Further, it is not practical to place a "U" shaped saddle over the cabling to space the staple from the cabling and so protect the cabling against damage from the staple.

One attempted solution to the above problems is disclosed in AU 11567/70 which describes a staple gun 36 for stapling high voltage wires 48 onto a support. The staple gun 36 is provided with a guide 46 for guiding the gun on the wire to be stapled, but the exact form of the guide is not described. The staple gun 36 also includes a magazine for storing a supply of staples 40 as well as an insulating strip 58. The insulating strip 58 made of relatively stiff semi-circular flexible insulating material, and consists of a series of sections 58.1 to 58.n which are joined along lines of weakness so as to be easily separable. Both the staples 40 and the insulating strip 58 are biased by respective springs 45 and 56 against respective stops 47 and 60. By depressing a lever 42 a driver 44 ejects a staple 40 from the magazine while simultaneously tearing off an underlying insulating section 58.n. The insulating section 58.n separates the staple 40 from the wire 48.

The staple assembly of the present invention seeks to overcome these disadvantages by employing a saddle designed to sit over the cabling and further designed to receive the staple. The saddle inhibits accidental piercing of the cabling.

### SUMMARY OF THE INVENTION

Therefore, it is an object of the present invention to provide a staple assembly for use in stapling tool capable of driving a staple with a saddle into a substrate.

In accordance with a first aspect of the present invention there is provided a saddle (204) for use in a stapling tool (10) with a staple (202) having a back (206) and two legs (208) extending from the back (206), the stapling tool (10) being capable of driving the staple (202) over the saddle (204) into a substrate for fixing an elongate member onto the substrate, the saddle including a body (210), and, two posts (212) extending from the body (210) which together define a receptacle (216) for receiving said elongate element,
whereby in use said staple (202) can be driven by said stapling tool (10) into said substrate over said saddle (204) with said elongate member received in said receptacle (216), said saddle (204) inhibiting contact between said staple (202) and said elongate member ; said
saddle being characterised in that said body (210) has a protuberance (218) extending into said receptacle (216) for engaging said elongate member, and in that a groove (214) is formed along said posts (212) and body (210) for receiving a said staple (202) whereby in use said staple (202) is received in said groove (214) and said elongate member is engaged by said protuberance (218)

In accordance with another aspect of the present invention there is provided a staple assembly (200) for use in a stapling tool (10) for fixing an elongate member onto a substrate, the staple assembly including:
a saddle (204) according to the first aspect of the present invention; and,
a staple (202) having a back (206) and two legs (208) extending from the back;
whereby in use said staple assembly (200) can be fixed to said substrate over said elongate member by said stapling tool (10) with said staple (202) received in said groove (214), said elongate member received in said receptacle (216) and engaged by said protuberance (218), and said saddle (204) inhibiting contact between said staple (202) and said elongate member.

In accordance with another aspect of the present invention there is provided a pre-loaded staple assembly (200) for receipt in a single chamber of a stapling tool (10) for fixing an elongate member onto a substrate, said preloaded staple assembly (200) including:
a saddle (204) according to the first aspect of the present invention; and,
a staple (202) having a back (206) and two legs (208) extending from said back;
whereby, in use, said preloaded staple (200) assembly is fixed to said substrate over the elongate member by the stapling tool (10) with said staple (202) received in said groove (214), said elongate member received in said receptacle (216) and engaged by said protuberance (216), and said saddle (204) inhibiting contact between said staple (202) and said elongate member.

Preferably, the back of the staple is elongate and the legs extend from proximate the ends of the back. Typically, the legs extend substantially at right angles to the back.

Preferably, the body of the saddle is elongate and the posts extend from proximate the ends of the- body. Typically, the posts extend substantially at right angles to the back.

### BRIEF DESCRIPTION OF THE DRAWINGS

An embodiment, being an example only, of the present invention will now be described with reference to the accompanying drawings, in which:-
Figure 1 is a side view, of a stapling tool having a staple magazine with two chambers;
Figure 2 is a cross sectional side view of the stapling tool of Figure 1;
Figure 3A and 3B are respectively a side view and a front view of an actuating lever of the stapling tool as shown in Figure 2;
Figures 4A and 4B are respectively a plan view and a side view of a drive spring of the stapling tool as shown in Figure 2;
Figures 5A and 5B are side views of a return spring of the stapling tool as shown in Figure 2, the former showing the return spring contracted and the latter showing the return spring extended;
Figures 6A to 6D are respectively a side, a plan, a front and a lower plan view of a front guide cover of the stapling tool as shown in Figure 1;
Figures 7A to 7C are respectively a side, a plan and a front view of a first retainer cover of the stapling tool as shown in Figure 1;
Figures 8A to 8C are respectively a side, a plan and a front view of a second retainer cover of the stapling tool as shown in Figure 1;
Figures 9A to 9C are respectively a side, a plan and a front view of a first retainer of the stapling tool as shown in Figure 2;
Figures 10A to 10C are respectively a side, a plan and a front view of a second retainer of the stapling tool as shown in Figure 2; and,
Figure 11 is a perspective view seen from above, of a staple assembly according to the embodiment of the invention for the stapling tool as shown in Figure 1.

### DESCRIPTION OF THE PREFERRED EMBODIMENT

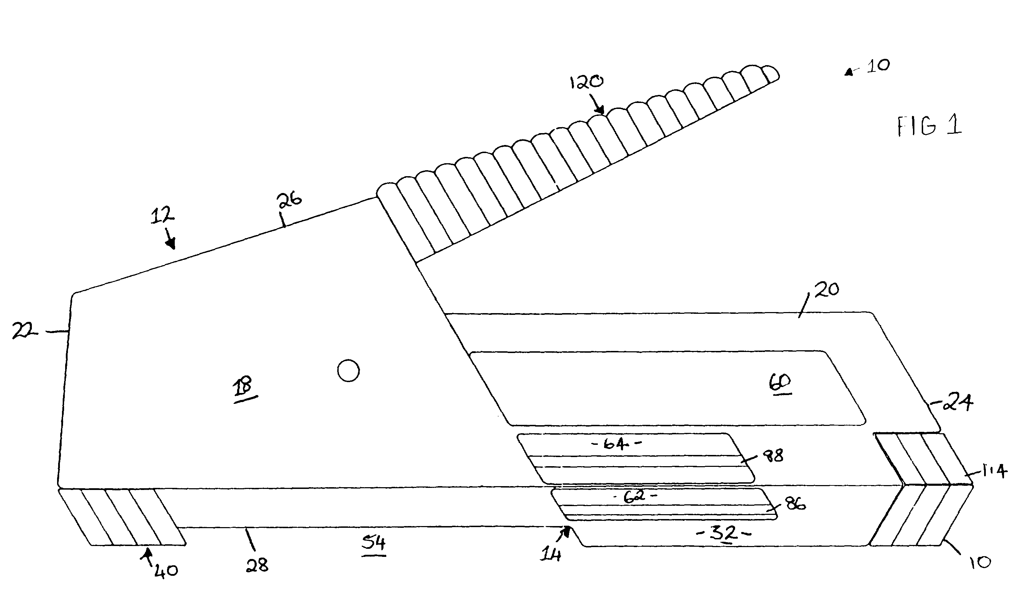

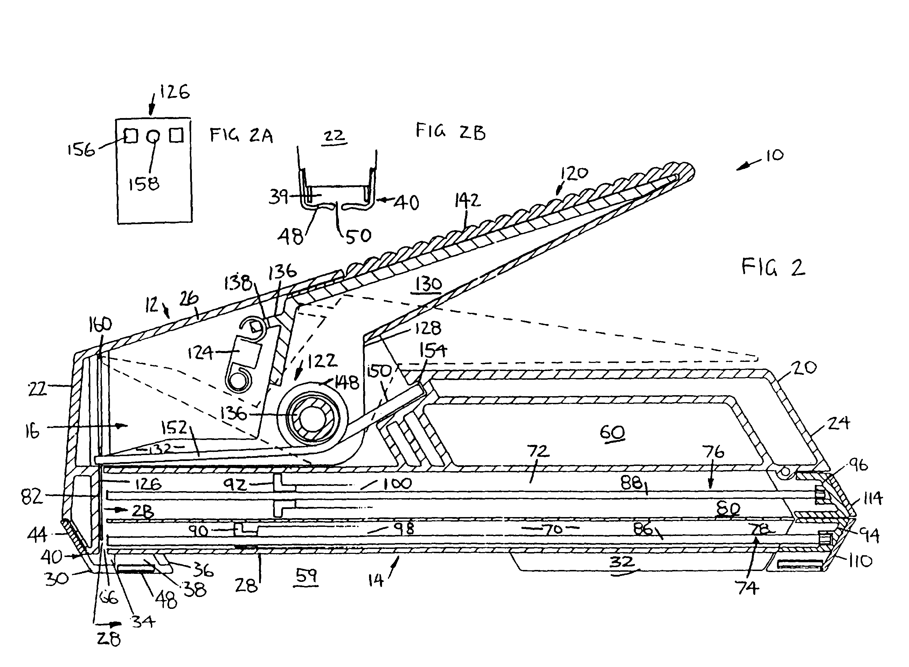

In Figures 1 and 2 there is shown a stapling tool 10 comprising a housing 12, a staple magazine 14 and a driver mechanism 16.

The housing 12 is an irregular box shape with two sides 18 spaced apart and disposed substantially mutually parallel and has a handle 20 extending from the box shape. The housing has a head 22, a tail 24, a top 26 and a base 28.

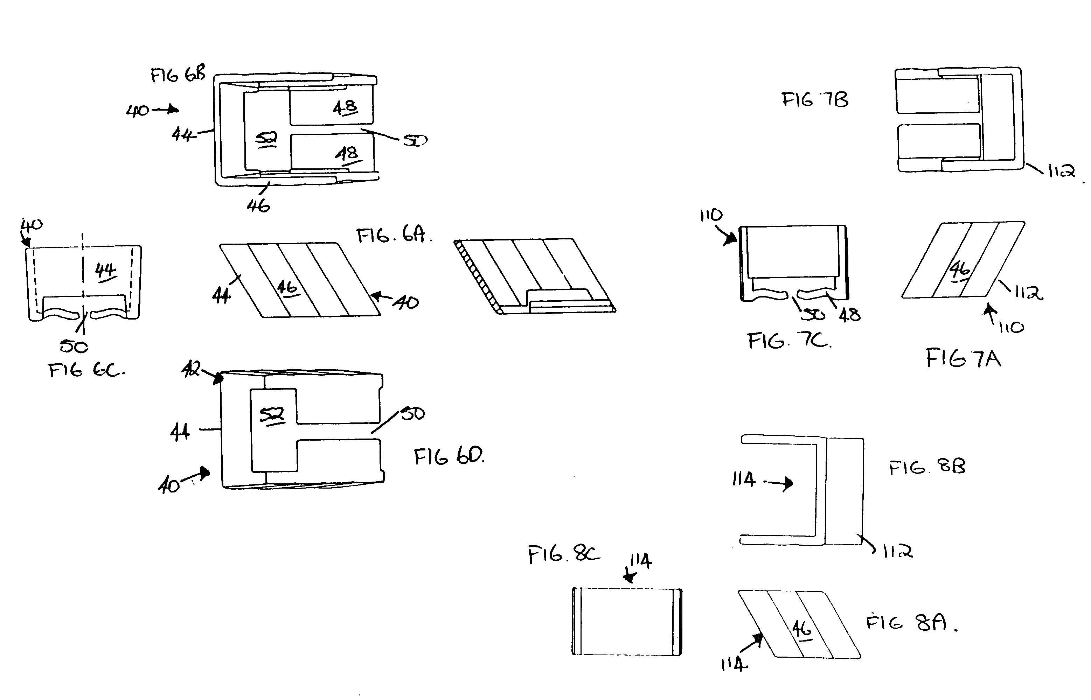

The housing 12 also has a front guide 30 and a rear guide 32. As shown in Figure 2 the front guide 30 has four tabs, being two sets of two tabs 34 and 36 projecting away from the base 28 parallel to each side 18 of the housing 12. The tabs 34 and 36 are spaced apart along the length of the base 28 to provide a void 38 therebetween. The two sets of the tabs 34 and 36 are spaced apart transversely on the base 28 to form a channel 39 as shown in Figure 2B. Fitted about the front guide 30 the housing 12 has a front guide cover 40, detailed in Figures 6A to 6D. The front guide cover 40 has a "U" shaped surround 42 with a nose 44 and two sides 46. Extending inwardly from opposite lower edges of the surround 42 the cover 40 has two flexible fingers 48. The fingers 48 are substantially aligned and terminate to form a gap 50 in the cover 40. Also, the fingers 48 extend only partway along the length of the sides 46 so as to define a recess 52 in the cover 40. The fingers 48 are typically curved downwardly so as to project a lower most extend at their free ends. When the cover 40 is fitted about front guide 30 the fingers 48 located below the voids 38 and are deflectable upwardly between the voids 38 and into the channel 39. The cover 40 is formed of flexible material, such as, for example, rubber or plastics material.

The housing 12 also has a rear guide 32 formed of two substantially identical webs, one web 56 being located parallel to each side of the housing 12 so as to continue the channel 39 in the base 28. The channel 39 however has a break extending intermediate the length of the base 28 to provide a clearance 59 in the channel 39. The clearance 59 allows the front guide 30 to follow a curved piece of an elongate member, such as cabling, and allows the cabling to exit the channel 39 via the clearance 59. This obviates the need for the channel 39 to straddle the cabling if clearance 59 was not provided.

The handle 20 of the housing 12 defines a recess 60 disposed transversely through the housing 12. The recess 60 is dimensioned to receive the fingers of one hand of a user up to but not including the second knuckle joint of the fingers. It is not necessary for the recess 60 to receive the fingers passed the second knuckle joint due to the nature in which the stapling tool 10 is used, as described hereinafter.

As shown in Figure 1 the housing 12 also has two apertures located in one of the sides 18. The apertures are termed a saddle breech 62 and a staple breech 64. The breeches 62 and 64 are dimensioned to allow loading of sets of saddles, joined face to face, and sets of staples, joined face to face, into the stapling tool 10. The breeches 62 and 64 are located towards the tail 24 of the housing 12 and typically below the recess 60.

The housing has an outlet 66 located in the base 28 proximate the head 22. The outlet 66 is dimensioned to allow passage of saddles and staples out of the housing 12. More particularly, the outlet 66 located between the tabs 34 of the front guide 30, transversely of the base 28 in the channel 39 as shown in Figure 2.

The staple magazine 14 comprises a saddle chamber 70, a staple chamber 72, a saddle feed mechanism 74 and a staple feed mechanism 76.

The chambers 70 and 72 have openings 78 and 80, respectively at the tail 24, of the housing 12, and extend to, but not through, the head 22. The chambers 70 and 72 are disposed substantially mutually parallel and substantially parallel to the base 28 of the housing 12. The cross-sectional dimensions of the chambers 70 and 72 are of a size suited to receive the saddles and staples, respectively, inserted thereinto via the breeches 62 and 64, respectively. Hence, the staple chamber 72 is slightly larger in cross-section than the saddle chamber 70. The chambers 70 and 72 terminate at a slot 82 at an end of the staple magazine 14 at the head 22. The slot 82 extends through both of the chambers 70 and 72 and is disposed substantially at right angles to the base 28 of the housing 12. The slot 82 is dimensioned to allow passage of a staple from the staple chamber 72 and a saddle from the saddle chamber 70.

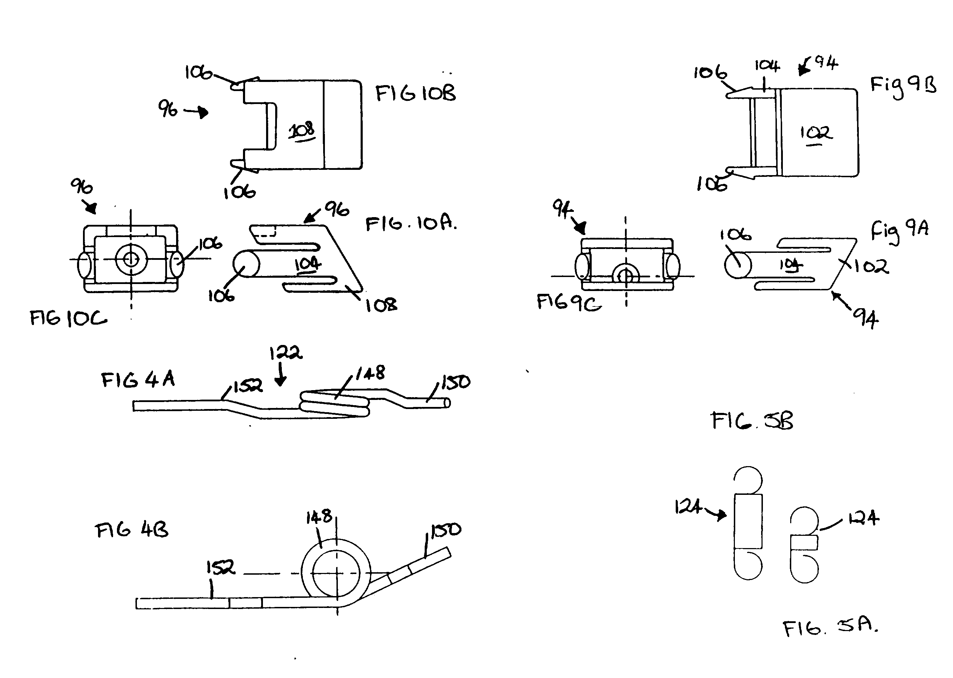

Each of the feed mechanisms 74 and 76 has a guide rod 86 and 88, a piston 90 and 92, and a retainer 94 and 96 and a compression spring 98 and 100 respectively. The guide rod 86 is attached at one end to the retainer 94 and the piston 90 and the spring 98 are slidably located upon the guide rod 86. The spring 98 is disposed between the piston 90 and retainer 94 for urging the piston 90 towards the slot 82. The piston 90 has a cross-sectional dimension which is complementary to the internal cross sectional dimension of the saddle chamber 70. The retainer 94 is detailed in Figures 9A to 9C. The retainer 94 has a body 102 having two arms 104 extending therefrom. Each of the arms 104 is terminated in a frustocylindrical lug 106. Each of the lugs 106 are disposed substantially at right angles to the arms 104 so as to engage in recesses in the saddle chamber 70 for securing the retainer 94 into the opening 78 of the saddle chamber 70. The body 102 of the retainer 94 is of complementary shape to the opening 78 so as to facilitate this purpose. The arrangement of the staple feed mechanism 76 is the same as that for the saddle feed mechanism 74 except that the shape of the retainer 96 is slightly different to that of the retainer 94. (Details for the retainer 94 are shown in Figures 10A to 10C). The difference is that the retainer 94 has a body 108 which angles in a direction opposite to the angling of the body 102 of the retainer 94. The retainer 94 is provided with a retainer cover 110 as detailed in Figures 7A to 7C. The retainer cover 110 is similar to the front guide cover 40 and like numerals denote like parts. The retainer cover 110 differs from the front guide cover 40 in that it angles in the opposite direction and has a tail 112. The retainer cover 110 locates about the retainer 98 such that the fingers 48 are disposed in line with the channel 39 formed by the rear guide 32. A further retainer cover 114 is provided for the retainer 96. The further retainer cover 114 is detailed in Figures 8A to 8C. The retainer cover 114 is similar to the retainer cover 110 and like numerals denote like parts. The retainer cover 114 differs from the retainer cover 110 in that it is devoid of fingers 48. The retainer cover 114 fits about the retainer 96 as shown in Figures 1 and 2.

Preferably, the feed mechanisms 74 and 76 are non-removable from the respective chambers 70 and 72 in normal use. For this purpose the guide rods 86 and 88 are flared at their free end so as to not allow passage of the pistons 90 and 92 off the free ends and the openings 78 and 80 are dimensioned so that the respective pistons 90 and 92 are not ordinarily able to exit the respective chambers 70 and 72. Accordingly, the feed mechanisms 74 and 76 are inhibited from detachment from the remainder of the stapling tool 10 in normal use.

The drive mechanism 16 comprises an actuating lever 120, a drive spring 122, a return spring 124, and a plunger 126, as shown in Figure 2.

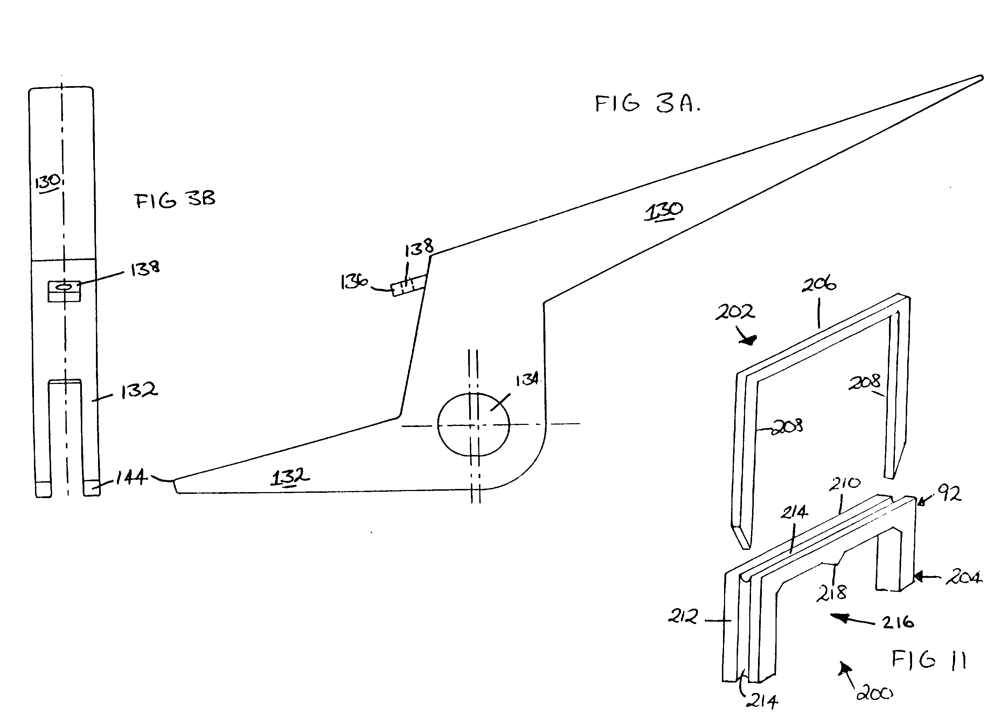

The actuating lever 120 is formed of a Z shaped lever 128 having a first arm 130 projecting out of the housing 12 and another second arm 132 disposed substantially parallel to the chambers 70 and 72 and directed towards the slot 82. The actuating lever 120 also has an elongate hole 134 located intermediate its length. The elongate hole 24 is dimensioned to be received about a post 136 of the housing 12. Typically, the hole 134 is semi-circular at its ends and rectangular therebetween. The actuating lever 120 also has a lug 136 directed towards the head 22 of the housing 12. The lug 122 has a hole 138 for receiving one end of the return spring 124. Another end of the return spring 124 is located about a further post 140 of the housing 12. The post 140 is positioned so that a longitudinal axis of the return 124 is at an angle of approximately 15° to the vertical. The actuating lever 120 also has a grip 142 located over the first arm 130. Typically, the grip 142 is made of rubber or compressible plastics material. The Z shaped lever 128 is detailed in Figures 3A and 3B. As shown in Figure 3B the second arm 132 is formed in two parts which terminates at tangs 144.

The return spring 124 is detailed in Figures 5A and 5B. The present embodiment the return spring 124 has a contracted coil length of approximately 6mm and an extended coil length of approximately 20mm. When installed into the stapling tool 10 the return spring 124 is partly prebiased to a coil length of approximately 12mm.

The drive spring 122 is detailed in Figures 4A and 4B. The drive spring 122 has a coil 148, a first leg 150 and second leg 152. The legs 150 and 152 depend from terminating ends of the coil 148. Each of the legs 150 and 152 has an offset intermediate its length so that the legs 150 and 152 are aligned upon a transverse centre line of the coil 148. The first leg 150 is dimensioned to be received in a void 154 of the housing 12 as shown in Figure 2. The coil 148 is disposed about the post 136 with the second leg 152 disposed between the two parts of the second arm 132 of the Z shaped lever 128.

The plunger 126 is substantially elongate and rectangular when viewed in plan as shown in Figure 2A. The plunger 126 has two apertures 156 located proximate one end and having a hole 158 positioned therebetween. The apertures 156 are shaped to receive the tangs 144 of the second arm 132 of the Z shaped lever 128. Hence, in the present embodiment the apertures 156 are square. The hole 158 is dimensioned to receive the second leg 152 of the drive spring 122, as shown in Figure 2. The plunger 126 is disposed between grooves 160 formed in the sides 18 proximate the head 22 so that the plunger 126 can slide in the grooves 160 substantially at right angles to a longitudinal axis of the chambers 70 and 72. When in a rest position, as shown in solid in Figure 2, a lower end of the plunger 126 extends through the staple chamber 72 and substantially through the saddle chamber 70. When in a raised position, as shown in phantom in Figure 2, the lower end of the plunger 126 extends only partway into the staple chamber 72. Hence, in the raised position the pistons 90 and 92 are able to urge their respective saddles and staples into the slot 82 for alignment with a longitudinal axis of the plunger 126.

In Figure 11 there is shown a staple assembly 200 having a staple 202 and a saddle 204. The staple 202 comprises an elongate back 206 and two legs 208, one leg 208 extending from each end of the back 206. The legs 208 are mutually parallel and depend from the back 206 substantially at right angles. Typically, the legs 208 are rectangular in cross-section, although they could be circular or any other geometric shape. Free ends of the legs 208 are chamfered from their outside to their inside so as to provide a sharp point at the inside of the staple. This has the effect of causing the staple to curve inwardly as it is driven into the timber. This is desired since it provides greater resistance to removal of the staple 202. The saddle 204 comprises an elongate body 210 and two posts 212, one post 212 extending from each end of the body 210. The posts 212 are mutually parallel and depend substantially at right angles to the body 210. The posts 212 are shorter in length than the legs 208 of the staples 202. The body 210 and the posts 212 each have a groove 214, disposed along their length on an outside surface of the saddle 204 for receiving the staple 202. The body 210 and the posts 212 of the saddle 204 define a receptacle 216 of substantially complementary shape to the cabling. The body 210 typically includes a protuberance 218 extending into the receptacle 216 for engaging with insulation of the cabling. Typically, the staples 202 are made of metal material and the saddles 204 are made of plastics material.

A plurality of the staples 202 are attached together face to face to form a set of staples for loading into the staple chamber 74 via the staple breech 64. Similarly, the saddles 204 are secured face to face to form a set of saddles 204 for inserting into the saddle chamber 70 via the saddle breech 62.

In use, the feed mechanisms 74 and 76 are drawn outwardly from the respective chambers 70 and 72 by pulling the respective retainers 94 and 96. Accordingly, the pistons 90 and 92 are drawn towards the tail 24 so as to clear the respective breeches 62 and 64. A set of saddles 204 can then be loaded into the saddle breech 62 and a set of staples 202 loaded into the staple breech 64. The sets of saddles 204 and staples 202 are slid forwardly towards the plunger 126 until no more saddles 204 and staples 202 can be loaded into the respective breeches 62 and 64. The retainer 94 is then pushed forwardly to move the guide rod 86 fully into the saddle chamber 70. In so doing the piston 90 bears against the last most saddle 204 and the spring 98 is compressed so as to urge the saddles 204 against the plunger 126. The retainer 96 is operated similarly so as to urge the staples 202 against the plunger 126. The stapling tool 10 is now ready for operation in fixing cabling and the like to a substrate such as a piece of timber.

In order to fix cabling to a piece of timber the cabling is first disposed along the timber and the front guide 30 and the rear guide 32 located over the cabling so as to maintain the cabling in contact with the timber. Use of the rear guide 32 is not essential to this procedure. In so doing the fingers 48 of the front guide cover 40 and the retainer cover 110 act to urge the cabling towards their respective gaps 50 which has the effect of centralising the cabling in the channel 39 of the base 28. The operator places his/her fingers in the recess 50 up to but not past the second knuckle and places his/her thumb and the ball of his/her palm on the grip 142 of the actuating lever 120. The operator then urges the first arm 130 of the actuating lever 120 towards the handle 20 until the first arm 130 meets the handle 20. This can be achieved by squeezing the first arm 30 and the handle 20 with the force of the operators hand and/or by straightening the operator's arm and forcing the ball of the operator's palm towards the handle 20 with the entire weight and force of the operator's arm and shoulder.

As the first arm 130 pivots towards the handle 20 the second arm 132 pivots away from the staple chamber 72 and moves the plunger 126 in the grooves 160 away from the outlet 66. As the plunger 126 moves out of the saddle chamber 70 one of the saddles 204 in the saddles chamber 70 is forced into the slot 82 by the force of the spring 98. Similarly, as the plunger 126 moves substantially out of the staple chamber 72 one of the staples 202 in the staple chamber 72 is forced into the slot 82 by the force of the spring 100. The drive spring 122 and the return spring 124 resist the pivoting of the Z shaped lever 128 from the rest position shown in Figure 2 towards the operative position shown in phantom in Figure 2. As the second arm 132 pivots its tangs 144 start to draw away from the head 22 and out of the apertures 156. As the Z shaped lever 128 reaches the end of its pivot the tangs 144 leave the apertures 156 and the force of the drive spring 122 drive the plunger 126 along the grooves 160 towards the outlet 66. In so doing a free end of the plunger 126 cleaves the staple 202 of the set of staples 202 in the staple chamber 72 and forces it towards the outlet 66. As the staple 202 moves out of the staple chamber 72 its legs 208 engage with the grooves 214 of the posts 212 of the saddle 204. As the plunger 126 moves further towards the outlet 66 the elongate back 206 of the staple 202 is received in the elongate body 210 of the saddle 204 which causes cleaving of the saddle 204 from the set of saddles 204 in the saddle chamber 70. Further movement of the plunger 126 towards the outlet 66 forces the lower ends of the staple out of the outlet 66 and through the recess 52 in the front guide cover 40 about the cabling and into the timber. As the legs 208 of the staple 202 enter into the timber the chamfered ends of the legs 208 cause the legs 208 to deflect inwardly in a dovetail manner. Further movement of the plunger 126 towards the outlet 66 forces the post 202 of the saddle 204 into contact with the timber and engagement of the protuberance 218 of the saddle 204 into the plastic sheathing of the cabling. Once the plunger 206 has driven the staple 202 into the timber pressure can be released from the actuating lever 120. As the actuating lever 120 returns to the rest position the return spring 204 urges the actuating lever 120 towards the head 22 such that the elongate hole 134 moves about the post 136 so that the tangs 144 of the second arm 132 re-engage with the apertures 156 of the plunger 126.

This completes one stapling cycle and further stapling cycles can be performed in the same manner. As the staples 202 and saddles 204 are used the pistons 92 and 90 proceed towards the slot 82. When the store of either staples 202 or saddles 204 runs out the associated piston 92 or 90 is urged into the slot 82 by the associated spring 100 or 98 and prevents the plunger 126 driving further saddles 204 or staples 202 out of the outlet 66 until the store is replenished. Hence, the risk of driving a staple 202 out of the outlet 66 without a saddle 204 is eliminated. Similarly, wastage of saddles 204 is avoided since saddles 204 are not driven out of the outlet 22 unless a staple 202 accompanies the saddle 204.

Where the cabling is to be routed around corners the front guide 30 is located about the cabling in the same manner as described hereinabove except that the cabling is allowed to exit the channel 39 of the base 28 via the clearance 59 instead of being made to travel through the rear guide 32. Hence, accurate alignment of the cabling within the channel 39 can be achieved even where the rear guide 32 and the retainer cover 110 are not used.

The staple magazine could have only one chamber and one feed mechanism. The chamber would be dimensioned to receive the saddles 204 preloaded with the staples 202. Typically, in such staple assemblies 200 the staple 202 is preloaded so that the free ends of its legs 208 do not project past the free ends of the posts 212 of the saddles 204. The remainder of the stapling tool remains the same and the operation of the stapling tool is as described hereinabove.

The stapling tool 10 has the advantage that it can more quickly fix cabling to timber. By the provision of the saddle 204 in the staple assembly 200 the likelihood of piecing the cabling with the staple 202 is substantially reduced and the possibility of the elongate back 206 of the staple 202 cutting into the cabling is eliminated. Also, by the provision of the fingers 48 of the front guide cover 40 the cabling can be centralised in the channel 39 to further reduce the likelihood of piecing the cabling with the legs 208 of the staple 202. Further, provision of loading of the saddles and staples via the respective breeches 62 and 64 eliminates the need for removal of the feed mechanisms from the stapling tool 10 and thus increases the ease of handling of the stapling tool 10 and reduces the likelihood of dropping and/or loosing the feed mechanism 70 and 76. Still further, entry of the pistons 90 and 92 into the slot 82 at exhaustion of the stores of saddles 204 and staples 202 avoids damage to the cabling by staples 202 without saddles 204 and avoids wastage of saddles 204 without staples 202. Still further, the clearance 59 allows use of the stapling tool 10 with cabling which is not straight.

The staple assembly 200 has the advantage that the saddle 204 spaces the staple 202 from the cabling. Also, the staple assembly 200 can be assembled by the stapling tool 10 at the point of use - hence preassembly is avoided and different grade and gauge staples 202 can be used for different densities of timber. Further, the chamfering of the free ends of legs 208 of the staples 202 cause the staples to dovetail inwardly and so clamp onto the saddle 204 at its posts 212. This has the effect of inhibiting uncoupling of the staple 202 and the saddle 204 from each other and causes the saddle 204 to clamp onto the cabling. Still further, the protuberance 218 grips the insulation of the cabling and avoids lengthwise movement of the cabling in the saddle 202.

Modifications and variations of the stapling tool are possible. For example, the fingers 48 could be replaced with other mechanisms for centring the cable in the channel 39. For example, the front guide 30 could be provided with two rearwardly trailing fingers (typically of spring steel) being slidably attached to the tabs 34 and moveable fore and aft, free ends of the fingers resting against shoulders which staple into the channel 39, such that the distance between the free ends of the fingers can be adjusted by sliding the fingers fore and aft with respect to the tabs 34. Also, other release mechanisms for releasing the plunger 126 could be used. For example, an overcenter pivoting lever could be used to disengage the actuating lever 120 from the plunger 126 once the plunger 126 had been moved a predetermined distance along the groove 160. In such a case adjustment of the predetermined distance could be provided to allow for variation in the driving force of the plunger 126 so as to vary the force of entry of the staple 202 into the timber. Such adjustment has advantages where the staple assemblies 200 are used in timbers of differing densities. Further, the breeches 62 and 64 could be provided with covers to inhibit ingress of dirt during use. Furthermore, the legs 207 of the staple 202 could be provided with barbs to inhibit removal of the staple 202 from the substrate.

## Claims

1. A saddle (204) for use in a stapling tool (10) with a staple (202) having a back (206) and two legs (208) extending from the back (206), the stapling tool (10) being capable of driving the staple (202) over the saddle (204) into a substrate for fixing an elongate member onto the substrate, the saddle including a body (210), and, two posts (212) extending from the body (210) which together define a receptacle (216) for receiving said elongate element, whereby in use said staple (202) can be driven by said stapling tool (10) into said substrate over said saddle (204) with said elongate member received in said receptacle (216), said saddle (204) inhibiting contact between said staple (202) and said elongate member ; said saddle being characterised in that said body (210) has a protuberance (218) extending into said receptacle (216) for engaging said elongate member, and in that a groove (214) is formed along said posts (212) and body (210) for receiving a said staple (202) whereby in use said staple (202) is received in said groove (214) and said elongate member is engaged by said protuberance (218).

2. A staple assembly (200) for use in a stapling tool (10) for fixing an elongate member onto a substrate, the staple assembly including:
a saddle (204) according to claim 1; and,
a staple (202) having a back (206) and two legs (208) extending from the back;
whereby in use said staple assembly (200) can be fixed to said substrate over said elongate member by said stapling tool (10) with said staple (202) received in said groove (214), said elongate member received in said receptacle (216) and engaged by said protuberance (218), and said saddle (204) inhibiting contact between said staple (202) and said elongate member.

3. A staple assembly (200) according to claim 2, characterised in that said each leg (208) is chamfered at an end distant said back (206) so that when said legs (208) are driven into the substrate they curve inwardly.

4. A pre-loaded staple assembly (200) for receipt in a single chamber of a stapling tool (10) for fixing an elongate member onto a substrate, said preloaded staple assembly (200) including:
a saddle (204) according to claim 1; and,
a staple (202) having a back (206) and two legs (208) extending from said back;
whereby, in use, said preloaded staple assembly (200) is fixed to said substrate over the elongate member by the stapling tool (10) with said staple (202) received in said groove (214), said elongate member received in said receptacle (216) and engaged by said protuberance (216), and said saddle (204) inhibiting contact between said staple (202) and said elongate member.

5. A pre-loaded staple assembly (200) according to claim 4, characterised in that each leg (208) at an end distant said back (206) is chamfered so that when said legs (208) extend into said substrate they curve inwardly.

## Patentansprüche

1. Ein Sattel (204) zur Benutzung in einer Heftmaschine (10) mit einer Klammer (202) bestehend aus Rückteil (206) und zwei sich vom Rückteil (206) ausstreckenden Beinen (208), indem die Heftmaschine fähig ist die Klammer (202) über dem Sattel (204) in das Substrat zu schlagen um dabei einen länglichen Teil am Substrat zu befestigen, wobei der Sattel einen Körper (210) und zwei sich vom Körper (210) streckende Pfosten (212) umfasst die zusammen einen Behälter (216) definieren der den genannten länglichen Teil empfängt, wodurch bei Benutzung die vorerwähnte Klammer (202) mit der vorerwähnten Heftmaschine (10) über den vorerwähnten Sattel (204) in das vorerwähnte Substrat geschlagen werden kann, wobei der vorerwähnte längliche Teil im vorerwähnten Behälter (216) aufgenommen wird, und wobei der vorerwähnte Sattel (204) eine Berührung zwischen der vorerwähnten Klammer (202) und den vorerwähnten länglichen Teil verhindert; der vorerwähnte Sattel dadurch gekennzeichnet, daß der vorerwähnte Körper (210) einen in den vorerwähnten Behälter (216) dringenden Höcker hat um in den vorerwähnten länglichen Teil, einzurasten, und daß entlang der vorerwähnten Pfosten (212) und dem Körper (210) eine Rinne (214) gebildet ist um eine vorerwähnte Klamner (202) anzunehmen wodurch bei Benutzung die vorerwähnte Klammer (202) in der vorerwähnten Rinne (214) aufgenommen wird und der vorerwähnte längliche Teil den vorerwähnten Höcker (218) einrasten lässt.

2. Eine Klammerzusammensetzung (200) zur Benutzung in einer Heftmaschine (10) die einen länglichen Teil an einem Substrat befestigt und folgendes einschließt:
einen Sattel (204) nach Anspruch 1; und,
eine Klammer (202) zusammengesetzt aus einem Rückteil (206) und zwei Beinen (208) die sich vom Rückteil (206) ausstrecken;
wodurch die vorerwähnte Klammerzusammensetzung (200) bei Benutzung an dem vorerwähnten Substrat über dem vorerwähnten länglichen Teil mit der vorerwähnten Heftmaschine (10) befestigt werden kann, wobei die vorerwähnte Klammer (202) in der vorerwähnten Rille (214) aufgenommen wird, der vorerwähnte längliche Teil in dem vorerwähnten Behälter (216) aufgenommen wird und den vorerwähnten Höcker (218) einrasten lässt, und der vorerwähnte Sattel (204) eine Berührung zwischen der vorerwähnten Klammer (202) und dem vorerwähnten länglichen Teil verhindert.

3. Eine Klammerzusammensetzung (200) nach Anspruch 2, dadurch gekennzeichnet, daß jedes der vorerwähnten Beine (208) an dem vom Rückteil (206) enfernten Ende abgeschrägt ist, so daß sich die vorerwähnten Beine (208) beim Einschlagen in das Substrat nach innen biegen.

4. Eine vorher geladene Klammerzusammensetzung (200) zur Annahme in einen einzelnen Behälter einer Heftmaschine (10) zur Befestigung eines länglichen Teiles an einem Substrat, wo die vorerwähnte, vorher geladene Klammerzusammensetzung (200) folgendes einschließt:
einen Sattel (204) nach Anspruch 1; und,
eine Klammer (202) zusammengesetzt aus einem Rückteil (206) und zwei Beinen (208) die sich von dem vorerwähnten Rückteil (206) ausstrecken;
wodurch die vorerwähnte Klammerzusammensetzung (200) bei Benutzung an dem vorerwähnten Substrat über dem vorerwähnten länglichen Teil mit der vorerwähnten Heftmaschine (10) befestigt werden kann, wobei die vorerwähnte Klammer (202) in der vorerwähnten Rille (214) aufgenommen wird, der vorerwähnte längliche Teil in dem vorerwähnten Behälter (216) aufgenommen wird und den vorerwähnten Höcker (218) einrasten lässt, und der vorerwähnte Sattel (204) eine Berührung zwischen der vorerwähnten Klammer (202) und dem vorerwähnten länglichen Teil verhindert.

5. Eine vorher geladene Klammerzusammensetzung (200) nach Anspruch 4, dadurch gekennzeichnet, daß jedes Bein (208) an dem vom Rückteil (206) enfernten Ende abgeschrägt ist, so daß sich die vorerwähnten Beine (208) beim Einschlagen in das Substrat nach innen biegen.

## Revendications

1. Un support (204) à utiliser dans un outil d'agrafage (10) avec une agrafe (202) ayant un dos (206) et deux jambes (208) s'étendant du dos (206), l'outil d'agrafage (10) étant capable de pousser l'agrafe (202) sur le support (204) dans un substrat pour fixer un membre allongé sur le substrat, le support comprenant un corps (210) et deux montants (212) s'étendant du corps (210) qui ensemble définissent un récipient (216) pour recevoir ledit élément allongé, par lequel ladite agrafe (202) peut être poussée par ledit outil d'agrafage (10) dans ledit substrat sur ledit support (204), ledit membre allongé étant reçu dans ledit récipient (216), ledit support (204) empêchant le contact entre ladite agrafe (202) et ledit membre allongé, ledit support étant caractérisé en ce que ledit corps (210) a une protubérance (218) s'étendant dans ledit récipient (216) pour engager ledit membre allongé, et en ce qu'une rainure (214) est formée le long desdits montants (212) et dudit corps (210) pour recevoir ladite agrafe (202) par laquelle pendant l'utilisation ladite agrafe (202) est reçue dans ladite rainure (214) et ledit membre allongé est engagé par ladite protubérance (218).

2. Un assemblage à agrafe (200) à utiliser dans un outil d'agrafage (10) pour fixer un membre allongé sur un substrat, l'assemblage à agrafe comprenant:
un support (204) selon la prétention n°1; et
une agrafe (202) ayant un dos (206) et deux jambes (208) s'étendant du dos;
par lequel pendant l'utilisation ledit assemblage à agrafe (200) peut être fixé audit substrat sur ledit membre allongé par ledit outil à agrafage (10), ladite agrafe (202) étant reçue dans ladite rainure (216), ledit membre allongé étant reçu dans ledit récipient (216) et engagé par ladite protubérance (218), et ledit support (204) empêchant le contact entre ladite agrafe (202) et ledit membre allongé.

3. Un assemblage à agrafe (200) selon la prétention n°2, caractérisé en ce que chacune desdites jambes (208) est biseautée au bout distant dudit dos (206) de sorte que lorsque lesdites jambes (208) sont poussées dans le substrat elles se recourbent vers l'intérieur.

4. Un assemblage à agrafe préchargé (200) à pour réception dans une seule chambre d'un outil d'agrafage (10) pour fixer un membre allongé sur un substrat, ledit assemblage à agrafe préchargé (200) comprenant:
un support (204) selon la prétention n°1; et
une agrafe (202) ayant un dos (206) et deux jambes (208) s'étendant dudit dos;
par lequel, pendant l'utilisation, ledit assemblage à agrafe préchargé (200) est fixé audit substrat sur le membre allongé par l'outil d'agrafage (10), ladite agrafe (202) étant reçue dans ladite rainure (214), ledit membre allongé étant reçu dans ledit récipient (216) et engagé par ladite protubérance (216), et ledit support (204) empêchant le contact entre ladite agrafe (202) et ledit membre allongé.

5. Un assemblage à agrafe préchargé (200) selon la prétention 4, caractérisé en ce que chaque jambe (208) au bout distant dudit dos (206) est biseautée de sorte que lorsque lesdites jambes (208) s'étendent dans ledit substrat elles se recourbent vers l'intérieur.
